## Europäisches Patentamt
## European Patent Office
## Office européen des brevets

(11) Numéro de publication: **0 288 374**
A1

(12) # DEMANDE DE BREVET EUROPEEN

(21) Numéro de dépôt: 88400943.2

(22) Date de dépôt: 19.04.88

(51) Int. Cl.4: **G 01 S 3/80**
G 01 S 11/00, G 01 S 5/18

(30) Priorité: 24.04.87 FR 8705829

(43) Date de publication de la demande:
26.10.88 Bulletin 88/43

(84) Etats contractants désignés: **DE ES GB IT NL**

(71) Demandeur: **THOMSON-CSF**
**173, Boulevard Haussmann**
**F-75379 Paris Cédex 08 (FR)**

(72) Inventeur: **Thubert, Dominique**
**THOMSON-CSF SCPI 19, avenue de Messine**
**F-75008 Paris (FR)**

(74) Mandataire: **Desperrier, Jean-Louis et al**
**THOMSON-CSF SCPI 19, avenue de Messine**
**F-75008 Paris (FR)**

(54) **Procédé de télémétrie sonore passive.**

(57) L'invention concerne les procédés de localisation des sources de bruit sonore.

Elle consiste à traiter les signaux de trois capteurs alignés (1, 2, 3) en effectuant des corrélations (10, 11) des signaux du capteur central avec ceux des capteurs extérieurs, puis en traitant les signaux de corrélation de manière à maximiser la somme de ces signaux.

Elle permet de mieux repérer la position des sources de bruit.

FIG_4

## Description

## PROCEDE DE TELEMETRIE SONORE PASSIVE

La présente invention concerne les procédés de télémétrie sonore passive dans lesquels on mesure la distance et le gisement d'une source de bruit sonore à l'aide d'au moins trois capteurs distincts en effectuant des traitements adéquats sur les signaux délivrés par ces capteurs en réponse aux bruits qu'ils reçoivent.

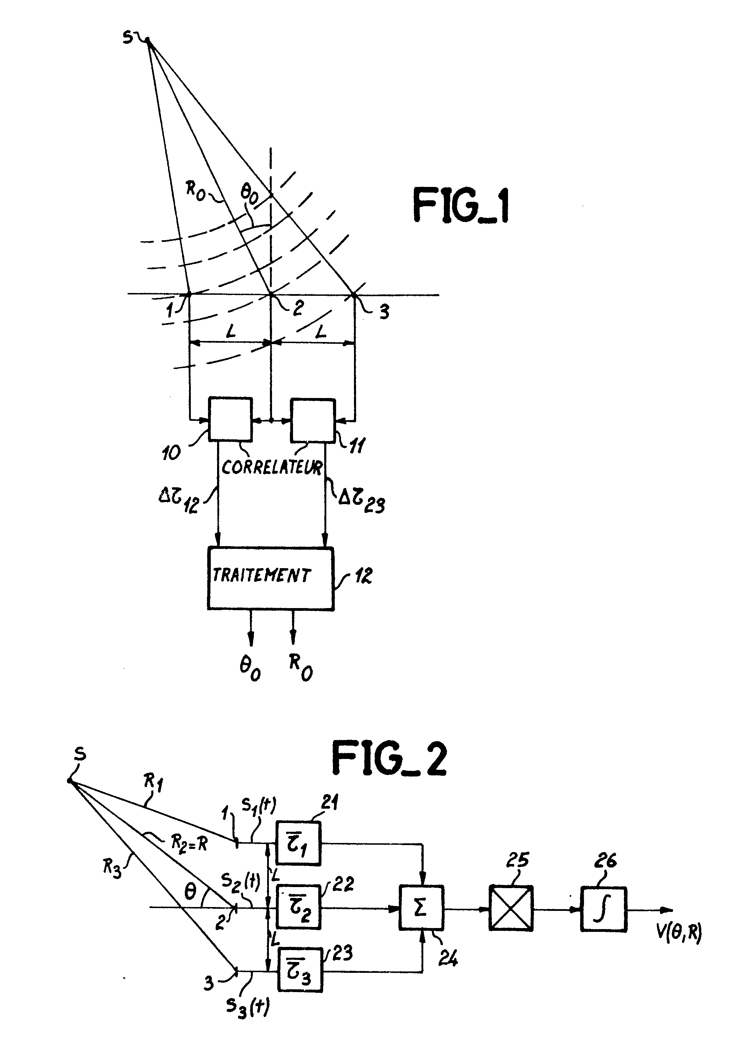

Il est connu d'utiliser, comme représenté sur la figure 1, trois capteurs 1, 2 et 3 alignés distants de L. Une source de bruit S est située dans un gisement $\theta_0$ repéré par rapport à la normale à l'alignement des 3 capteurs, et à une distance $R_0$ du capteur central 2. La source rayonne un bruit se propageant sur un front d'onde quasiment circulaire. Le bruit rayonné parvient donc sur l'antenne à des instants qui sont différents. Ainsi dans le cas de la figure 1, le front d'onde arrive sur le capteur 1 en premier, puis sur le capteur 2 avec un retard $\Delta\tau_{12}$, et enfin sur le capteur 3 avec un retard $\Delta\tau_{23}$ par rapport au capteur 2. Ces deux différences $\Delta\tau_{12}$ et $\Delta\tau_{23}$ de temps d'arrivée sur les récepteurs permettent d'obtenir la direction $\theta_0$ et la distance $R_0$ d'après les expressions suivantes obtenues en première approximation :

$$\theta_0 = \arcsin \frac{c(\Delta\tau_{12}+\Delta\tau_{23})}{2L} \qquad (1)$$

$$R_0 = \frac{L^2\cos^2\theta_0}{c(\Delta\tau_{23}-\Delta\tau_{12})} \qquad (2)$$

où c est la vitesse des ondes.

Dans les systèmes de télémétrie passive existants, notamment ceux destinés à l'acoustique sous-marine, les trois capteurs constituent trois antennes avec lesquelles sont formées des voies directives de façon à améliorer la sensibilité. Dans un premier système, dit système A, pour chaque voie correspondant à une direction $\theta$, on effectue dans 2 circuits 10 et 11 la corrélation des signaux de voies des antennes 1 et 2 d'une part et 2, 3 d'autre part. Les positions des maxima des deux fonctions d'intercorrélation fournissent les mesures de $\Delta\tau_{12}$ et $\Delta\tau_{23}$. Un circuit de traitement 12 permet à partir de ces mesures de déterminer $\theta_0$ et $R_0$.

Dans un deuxième système, dit B, on applique aux signaux des voies des 3 antennes des retards $\tau_1, \tau_2, \tau_3$ correspondant à un point S de l'espace repéré en R et $\theta$. Ceci revient à focaliser la mesure sur le point S. Les 3 signaux sont ensuite sommés, détectés et intégrés. On a ainsi à un instant donné une fonction $V(\theta,R)$ qui passe par un maximum pour les valeurs $\theta_0,R_0$ correspondant à la position du bruiteur.

Avec ce système, plus compliqué, on obtient de meilleures performances en détection. En limite de détection notamment ce système permettra de mesurer $\theta_0$ et $R_0$, alors qu'avec le système A la mesure sera impossible, le signal n'étant pas détecté. Le système B est d'une complexité supérieure au système A car il nécessite de retarder séparemment chaque signal pour obtenir chaque point de la fonction $V(\theta,R)$.

Selon l'invention, on effectue une corrélation des trois signaux comme dans le système A, puis on traite les signaux de corrélation obtenus pour obtenir, comme dans le système B, une fonction dont on détermine le maximum qui correspond aux valeurs $\theta_0, R_0$.

D'autres particularités et avantages de l'invention apparaîtront clairement dans la description suivante présentée à titre d'exemple non limitatif en regard des figures annexées qui représentent :
- la figure 1, le schéma d'un premier système de télémétrie connu ;
- la figure 2, le schéma d'un deuxième système de télémétrie connu ;
- la figure 3, des courbes explicatives ;
- la figure 4, le schéma d'un système de télémétrie selon l'invention.

Dans le système représenté en figure 2, les signaux émis par une source de bruit S sont reçus sur les trois capteurs (ou sous-antennes) alignés 1, 2, 3 qui délivrent respectivement les signaux $S_1(t)$, $S_2(t)$, $S_3(t)$.

Comme représenté sur la figure 2, on retarde dans les circuits 21, 22, 23 les signaux $S_i(t)$ des retards $\tau_1, \tau_2, \tau_3$ calculés pour un front d'onde circulaire. On additionne ensuite ces signaux dans le sommateur 24. Le signal obtenu est ensuite détecté quadratiquement dans un détecteur 25, puis intégré dans un intégrateur 26 sur une durée T' pour fournir un signal V. Le capteur central 2 étant pris comme référence de temps, l'angle $\theta$ correspond à la direction de la source S, et $R_2 = R$ à sa distance. Le signal V est donc fonction de $\theta$ et de R.

Les signaux $S_i(t)$ sont des signaux aléatoires à moyenne nulle. On suppose ici que les bruits $B_i(t)$ sont de même niveau sur les trois capteurs.

L'expression du signal de sortie $V(\theta,R)$ est donc :

$$V(\theta,R)=\frac{1}{T'}\int_0^{T'}\left[S_1(t-\overline{\tau_1})+S_2(t-\overline{\tau_2})+S_3(t-\overline{\tau_3})\right]^2 dt \quad (3)$$

On rappelle la définition des produits d'intercorrélation :

$$C_{XX}(\tau) = \frac{1}{T'}\int_0^{T'} X(t-\tau)X(t)\ dt$$

$$\text{et } C_{BB}(\tau) = \frac{1}{T'}\int_0^{T'} B(t-\tau)B(t)\ dt$$

Chaque signal $S_i(t)$ est composé d'une partie "signal" $X(t+\tau_i)$ et d'une partie "bruit" ambiant parasite $B_i(t)$, $\tau_i$ étant le retard effectif

$$(\tau_i = \frac{R_i}{c})$$

des ondes accoustiques rayonnées par la source S vers le capteur i. L'expression du signal est : $S_i(t) = X(t+\tau_i) + B_i(t)$. Comme les capteurs 1, 2, 3 sont éloignés d'une distance L grande devant la longueur d'onde moyenne des signaux reçus, les bruits $B_i(t)$ sont indépendants entre capteurs.

De plus le signal $X(t+\tau i)$ est décorrélé des bruits $B_i(t)$. Lorsque la durée d'intégration T' est grande devant l'inverse de la bande de fréquences, on obtient une expression équivalente de $V(\theta,R)$ :
$V(\theta,R) = 3(C_{XX}(0) + C_{BB}(0)) + 2C_{XX}(\overline{\Delta\tau}_{12} - \Delta\tau_{12}) + 2C_{XX}(\overline{\Delta\tau}_{23} - \Delta\tau_{23}) + 2C_{XX}(\overline{\Delta\tau}_{13} - \Delta\tau_{13})$  (4)
avec $\Delta\tau_{ij} = \tau_i - \tau_j$ et $\overline{\Delta\tau}_{ij} = \overline{\tau}_i - \overline{\tau}_j$

En effet l'expression (3) se décompose en 6 termes ; il y a 3 termes en $S_i^2$ et 3 termes en $S_iS_j$. Les 3 termes en $S_i^2$ donnent le terme 3 $(C_{XX}(0) + C_{BB}(0))$. Chaque terme en $S_iS_j$ se décompose en 4 termes :
$S_i(t-\overline{\tau_i})S_j(t-\overline{\tau_j}) = X(t+\overline{\tau_i-\tau_i})X(t+\tau_j-\overline{\tau}_j)$
$+ X(t+\tau_i-\overline{\tau_i})B_j(t)$
$+ X(t+\tau_i-\overline{\tau_j})B_i(t)$
$+ B_i(t)B_j(t)$
Compte tenu des enseignements précédents il reste :

$$\frac{1}{T'}\int_0^{T'} X(t+\tau_i-\overline{\tau}_i)X(t+\tau_j-\overline{\tau}_j)dt$$

Ce qui s'écrit aussi, par simple changement de l'origine des temps t :

$$\frac{1}{T'} \int_0^{T'} X\left[t-(\overline{\tau}_i-\tau_i-\tau_j-\overline{\tau}_j)\right] X(t)dt$$

$$=C_{XX}(\overline{\Delta\tau}_{ij}-\Delta\tau_{ij})$$

Les différences entre les retards $\overline{\Delta\tau}_{ij}$ s'écrivent :

$\overline{\Delta\tau}_{12} = T(\theta) + D(\theta,R) = T + D$
$\overline{\Delta\tau}_{23} = T(\theta) - D(\theta,R) = T - D$
$\overline{\Delta\tau}_{13} = 2T(\theta) = 2T$

En reportant ces différences dans (4), on voit que les seuls termes qui dépendent de la distance sont: $C_{XX}(\overline{\Delta\tau}_{12} - \Delta\tau_{12})$ et $C_{XX}(\overline{\Delta\tau}_{23} - \Delta\tau_{23})$.

Pour localiser la source de bruit S, il faut rechercher les valeurs de R et θ qui maximisent la fonction (4).

Pour chaque intercorrélation $C_{ij}(\overline{\Delta\tau}_{ij})$ et d'après les enseignements précédents, il ne reste que le terme "signal" soit :

$$C_{ij}(\overline{\Delta\tau}_{ij})=\frac{1}{T'} \int_0^{T'} X(t+\tau_i-\overline{\tau}_i)X(t+\tau_j-\overline{\tau}_j)dt$$

qui est strictement égal à $C_{XX}(\overline{\Delta\tau}_{ij}-\Delta\tau_{ij})$.

On peut donc de façon équivalente rechercher le maximum de la fonction G(θ,R) telle que :
$G(\theta,R) = C_{12}(\overline{\Delta\tau}_{12}) + C_{23}(\overline{\Delta\tau}_{23})$     (5)

Avec les notations définies précédemment, on a :
$G(\theta,R) = C_{12}[T(\theta)+D(\theta,R)] + C_{23}[T(\theta)-D(\theta,R)]$     (6).
qui est la somme des 2 fonctions $C_{12}$ et $C_{23}$ du système A.

Les valeurs de θ et de R qui maximisent la fonction (6) permettent de localiser la source de bruits. Le système selon l'invention permet d'obtenir les avantages de sensibilité du système B, dûs à la focalisation des voies, sans avoir la complication et la durée de traitement liées au besoin de retarder par toute une série de valeurs les signaux reçus. Les moyens de corrélation qui sont utilisés sont analogues à ceux du système A.

Les signaux d'entrée de ces corrélateurs sont des fonction du temps, et les signaux de sortie sont des fonctions des variables $t_1 = T + D$ et $t_2 = T - D$ qui ont toutes deux les dimensions d'un retard.

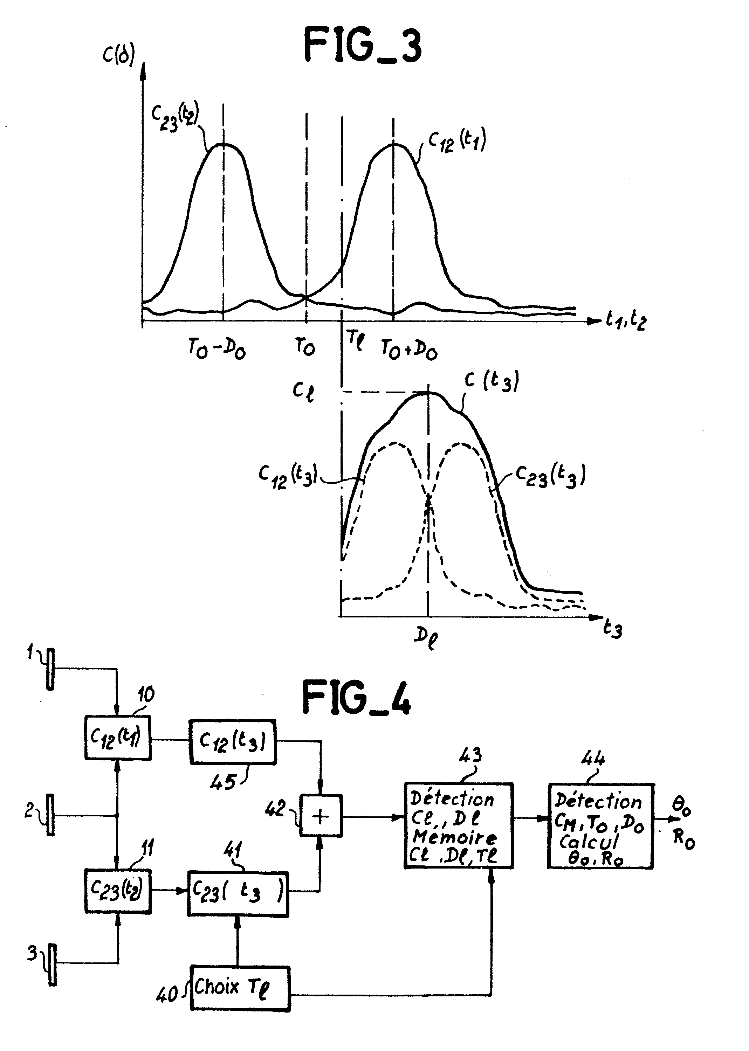

Ces signaux de sortie sont représentés sur le diagramme supérieur de la figure 3. On y remarque que les courbes se croisent pour $t_1 = t_2 = T_0$ et présentent respectivement des maxima pour $t_1 = T_0 + D_0$ et $t_2 = T_0 - D_0$. Dans un premier temps, on fixe une valeur particulière $T_1$ , puis on somme point par point les deux courbes $C_{12}(T_1+D)$ et $C_{23}(T_1-D)$ en faisant varier D. Ceci revient à sommer les deux fonctions de corrélation en prenant des points symétriques autour de l'axe d'abscisse $T_1$. Chacune de ces paires de points correspond donc à des abcisses $T_1+D_1$ et $T_1-D_1$. Ceci donne une courbe C $(t_3)$ représentée sur le diagramme inférieur de la figure 3. En pratique pour construire C$(t_3)$ il suffit de à retourner la courbe $C_{23}(t_2)$ autour de l'axe d'abscisse $T_1$ donnant $C_{23}(t_3)$ et de sommer $C_{23}(t_3)$ avec la courbe $C_{12}(t_1)$.

Selon l'invention, cette courbe C$(t_3)$ présente un maximum $C_1$ lorsque $t_3$ prend une valeur $D_1$ proche de $D_0$.

On itère le processus pour différentes valeurs de $T_1$ fournissant une série de valeurs $T_1,D_1,C_1$.

Parmi l'ensemble des valeurs $C_1$ on choisit celle qui est maximum soit $C_M$. A cette valeur correspond naturellement la valeur maximale de la fonction G(θ,R), et les valeurs correspondantes de T et D sont donc $T_0$ et $D_0$ dont on déduit alors $\theta_0$ et $R_0$.

Ainsi qu'on le voit sur la figure 3, ce maximum-maximorum correspond graphiquement à une superposition des courbes $C_{12}$ et $C_{23}$ lorsque cette dernière a été retournée autour de l'axe d'abscisse $T_0$.

Pour mettre en oeuvre le procédé selon l'invention, on utilise par exemple un système tel que représenté sur la figure 4.

Les signaux sonores arrivent sur les transducteurs 1 à 3 qui délivrent des signaux électriques appliqués aux corrélateurs 10 et 11 dans lesquels on effectue le traitement permettant d'obtenir les fonctions $C_{12}(t_1)$ et $C_{23}(t_2)$.

Un circuit de contrôle 40 permet de sélectionner les valeurs successives de $T_1$.

Ce circuit de contrôle commande alors un circuit de calcul 41 qui permet d'obtenir la fonction $C_{23}(t_3)$.

Un autre circuit de calcul 45 permet d'obtenir la fonction $C_{12}(t_3)$.

Un additionneur 42 permet ensuite de sommer $C_{12}(t_3)$ et $C_{23}(t_3)$ pour obtenir C $(t_3)$.

Un autre circuit de calcul 43 permet à partir de C $(t_3)$ de déterminer la valeur maximale $C_1$ et la valeur

correspondante $D_1$. Il mémorise ces deux valeurs en même temps que la valeur $T_1$ correspondante qu'il reçoit du circuit 40.

Un dernier circuit de calcul 44 permet d'obtenir dans la mémoire du circuit 43 la valeur maximale $C_M$ des $C_1$. Les valeurs $T_0$ et $D_0$ correspondantes prises par $T_1$ et $D_1$ permettent de calculer $\theta_0$ et $R_0$.

A titre de variante d'exécution, on réalise toutes ces opérations avec un calculateur numérique convenablement programmé.

On remarquera également que, si le point de croisement des courbes $C_{12}(t_1)$ et $C_{23}(t_2)$ ne permet pas d'obtenir directement $T_0$ avec une bonne précision, ce point donne un ordre de grandeur de $T_0$. On peut donc limiter la plage de recherche en prenant les premières valeurs de $T_1$ dans la zone où se trouve manifestement $T_0$.

Par ailleurs il n'est pas nécessaire que les trois capteurs soient équidistants d'une distance L.

En effet si le capteur 1 par exemple est à une distance $L_1$ du capteur 2, et celui-ci à une distance $L_2$ du capteur 3, les fonctions $C_{12}(t_1)$ et $C_{23}(t_2)$ présenteront des maxima situés respectivement en $T_{10} + D_{10}$ et en $T_{20} - D_{20}$.

Compte tenu des relations entre $T, D$ et $R, \theta$, on passe de $T_1, D_1$ à $T_2, D_2$ par les relations homothétiques :

$$T_2 = \frac{L_2}{L_1} T_1 \text{ et } D_2 = \left[\frac{L_2}{L_1}\right]^2 D_1$$

Le principe du traitement des signaux exposé plus haut ne change pas, mais il faut prendre en compte ces rapports d'homothétie. Pour cela il y a lieu de partir non plus d'une valeur unique d'abscisse $T_1$, mais de deux valeurs $T_{11}$ et $T_{12}$ telles que

$$\frac{L_2}{L_1} T_{11}.$$

On somme alors les valeurs de $C_{12}(t_1)$ et de $C_{23}(t_2)$ obtenues respectivement pour les séries de valeurs $T_{11} + D_1$ et $T_{12} - D_2$,

$$\left(\text{avec } D_2 = \left[\frac{L_2}{L_1}\right]^2 D_1\right.$$

afin d'obtenir la courbe $C(t_3)$. L'homothétie étant prise dans ce sens on obtient donc le maximum $C_m$ pour la valeur $D_{11}$. On pourrait bien entendu prendre l'homothétie dans l'autre sens pour obtenir la valeur $D_{12}$, mais ceci ne changerait rien au résultat. L'itération de ce processus conduit là aussi à obtenir le maximum maximorum $C_M$ pour $T_{10}$ et $D_{10}$.

## Revendications

1. Procédé de télémétrie sonore passive dans lequel on reçoit des signaux sonores provenant d'au moins une source (S) sur au moins trois capteurs (1, 2, 3), on effectue au moins deux corrélations (10, 11) entre les signaux électriques émis par ces capteurs en réponse aux signaux sonores reçus, l'une de ces corrélations ayant lieu entre le capteur central et l'un des capteurs extérieurs et délivrant un premier signal $C_{12}(t_1)$ de corrélation fonction d'un paramètre $t_1$ et l'autre corrélation ayant lieu entre le capteur central et l'autre capteur extérieur et délivrant un deuxième signal $C_{23}(t_2)$ de corrélation fonction d'un paramètre $t_2$, et on traite ces signaux de corrélation pour obtenir la direction $\theta_0$ et la distance $R_0$ de la source par rapport au capteur central, caractérisé en ce que l'on sélectionne une première valeur arbitraire $T_1$ des paramètres $t_1$ et $t_2$, que l'on somme point par point les deux signaux $C_{12}(t_1)$ et $C_{23}(t_2)$ en prenant des valeurs symétriques autour de la valeur $T_1$, ces valeurs étant $T_1 + D$ pour $t_1$ et $T_1 - D$ pour $t_2$, pour obtenir un troisième signal $C(t_3)$ fonction d'un paramètre $t_3$, que l'on détermine le maximum $C_1$ de ce troisième signal et la valeur $D_1$ du paramètre $t_3$ correspondant à ce maximum, que l'on itère ce processus pour une série de valeurs de $T_1$, que l'on détermine le maximum maximorum $C_M$ que prend $C_1$ pour cette série de valeurs et les valeurs $T_0$ et $D_0$ de $T_1$ et $D_1$ correspondant à ce maximum maximorum, et que l'on détermine la direction et la distance de la somme avec les formules $T_0 = \frac{L}{c} \sin\theta_0$ et

$$D_0 = \frac{L^2}{2R_0 c} \cos^2\theta_0.$$

2. Procédé selon la revendication 1, caractérisé en ce que l'on utilise les signaux de trois capteurs (1, 2, 3) alignés équidistants d'une longueur L.

3. Procédé selon la revendication 1, caractérisé en ce que l'on utilise les signaux d'un capteur central (2) et de deux capteurs extérieurs (1, 2) alignés sur une droite passant par le capteur central et distant de celui-ci respectivement d'une longueur $L_1$ et d'une longueur $L_2$, les valeurs de T et de D se dédoublant alors en paires de valeurs $T_1$, $T_2$ et $D_1$, $D_2$ réunies par les relations d'homothétie

$$T_2 = \frac{L_2}{L_1} T_1 \quad \text{et} \quad D_2 = \left[\frac{L_2}{L_1}\right]^2 D_1.$$

FIG_1

FIG_2

# FIG_3

# FIG_4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 063 517  (THOMSON-CSF) <br> * Page 3, ligne 18 - page 8, ligne 8; figures 1-3 * <br> --- | 1-3 | G 01 S    3/80 <br> G 01 S   11/00 <br> G 01 S    5/18 |
| A | FR-A-2 094 091  (F. KRUPP) <br> * Page 3, lignes 3-35; figures 1,2 * <br> --- | 1 | |
| A | US-A-3 249 911  (B.G. GUSTAFSSON) <br> * Colonne 4, ligne 24 - colonne 5, ligne 3; figures 4,5 * <br> --- | 1 | |
| A | US-A-4 601 025  (J.D. LEA) <br> * Colonne 4, ligne 1 - colonne 5, ligne 33; figure 4 * <br> --- | 1 | |
| .A | IEEE TRANSACTIONS ON ACOUSTICS, SPEECH & SIGNAL PROCESSING, vol. ASSP-29, no. 3, partie II, juin 1981, pages 463-470, New York, US; G.C. CARTER: "Time delay estimation for passive sonar signal processing" <br> * Pages 465-468, paragraphes V,VII * <br> ----- | 1,2 | |

DOMAINES TECHNIQUES RECHERCHES (Int. Cl.4)

G 01 S

Le présent rapport a été établi pour toutes les revendications

| Lieu de la recherche | Date d'achèvement de la recherche | Examinateur |
|---|---|---|
| LA HAYE | 04-07-1988 | VAN WEEL E.J.G. |

CATEGORIE DES DOCUMENTS CITES

X : particulièrement pertinent à lui seul
Y : particulièrement pertinent en combinaison avec un
     autre document de la même catégorie
A : arrière-plan technologique
O : divulgation non-écrite
P : document intercalaire

T : théorie ou principe à la base de l'invention
E : document de brevet antérieur, mais publié à la
     date de dépôt ou après cette date
D : cité dans la demande
L : cité pour d'autres raisons

...................
& : membre de la même famille, document correspondant

EPO FORM 1503 03.82 (P0402)